# EUROPÄISCHE PATENTANMELDUNG

(11) **EP 1 688 712 A1**
(43) Veröffentlichungstag der Anmeldung: **09.08.2006**
(21) Anmeldenummer: 06001685.4
(22) Anmeldetag: 27.01.2006
(51) Int. Cl.: G01D 21/02, H01L 21/762

(54) **Integrierter Multisensor**

(30) Priorität: 05.02.2005 DE 102005005350
(71) Anmelder: ATMEL Germany GmbH, 74072 Heilbronn (DE)
(72) Erfinder: Fischer, Harald, 56130 Bad-Ems (DE)

(57) **Zusammenfassung**

Die Erfindung betrifft einen integrierten Multisensor, insbesondere für einen Einsatz in einer Brennkraftmaschine eines Kraftfahrzeuges, mit wenigstens einem Druck-/Temperatursensor, mit wenigstens einem Magnetfeldsensor und mit einer Mehrzahl von Isolatorwannen, wobei jeweils eine Isolatorwanne einen Druck-/Temperatursensor oder Magnetfeldsensor derart umgibt, dass die Sensoren jeweils voneinander elektrisch und mechanisch entkoppelt sind.

## Beschreibung

Die Erfindung betrifft einen integrierten Multisensor, insbesondere für einen Einsatz in einer Brennkraftmaschine eines Kraftfahrzeuges.

Das technische Gebiet der Erfindung betrifft die gleichzeitige Messung verschiedener Messgrößen wie Temperatur, Frequenz, Druck und Magnetfeld in einer Umgebung der Automobil- oder Umweltmesstechnik oder dergleichen. Solche Messungen werden beispielsweise in einem Einspritzventil eines Motors eines Kraftfahrzeuges zur Steuerung desselben durchgeführt. Für die einzelnen Messung der Messgrößen existieren jeweils eine Vielzahl von Messgebern, die für den Fachmann allgemein bekannt sind. Für die gleichzeitige Messung des Druckes, der Frequenz und des Magnetfeldes ist bekanntlich jeweils ein jeder dieser Messgrößen zugeordneter, eigener Messgeber vorgesehen. Die für die Vielzahl der verschiedenen Messgeber vorhandenen Platinen sind zur Auswertung der Messergebnisse jeweils mit einer Auswertevorrichtung oder Steuervorrichtung, beispielsweise einem Microcontroller, verdrahtet. Nachteiligerweise bedarf die Vielzahl vorzusehender Platinen und deren Verdrahtung mit dem Microcontroller einen hohen Platzbedarf, der aber zum Beispiel in einem Einspritzventil einer Brennkraftmaschine nur sehr beschränkt vorhanden ist.

Ein weiteres Problem besteht darin, dass sich die einzelnen Messungen bei einer nahen Anordnung der einzelnen Messgeber, welche in einem Einspritzventil oder in vielen anderen Anwendungen der Messtechnik gegeben ist, einander beeinflussen, sodass das Messergebnis dadurch unerwünschterweise verfälscht wird. Beispielsweise setzt eine optimierte Druckmessung die Genauigkeit eines zur Magnetfeldmessung eingesetzten Magnetfeldsensors deutlich herab.

Der vorliegenden Erfindung liegt nun die Aufgabe zugrunde, einen einzigen integrierten Sensor insbesondere zur Temperaturmessung, zur Frequenzmessung, zur Druckmessung und zur Magnetfeldmessung bereitzustellen, bei dem sich die einzelnen Messungen gegenseitig nicht beeinflussen.

Erfindungsgemäß wird diese Aufgabe durch einen Multisensor mit den Merkmalen des Patentanspruchs 1 gelöst.

Demgemäß ist ein integrierter Multisensor vorgesehen, insbesondere für einen Einsatz in einer Brennkraftmaschine eines Kraftfahrzeuges, mit wenigstens einem Druck-/Temperatursensor, mit wenigstens einem Magnetfeldsensor und mit einer Mehrzahl von Isolatorwannen, wobei jeweils eine Isolatorwanne einen Druck-/Temperatursensor oder Magnetfeldsensor derart umgibt, dass die Sensoren jeweils voneinander elektrisch und mechanisch entkoppelt sind. Ein Druck-/Temperatursensor kann als Drucksensor zur Messung des Druckes oder als Temperatursensor zur Messung Temperatur oder als ein Sensor zur Messung des Druckes und der Temperatur ausgebildet sein.

Die der vorliegenden Erfindung zugrunde liegende Idee besteht darin, jeden Einzelsensor (Druck-/Temperatursensor, Magnetfeldsensor) des integrierten Multisensors mit einer Isolatorwanne zu umgeben, sodass mittels des Druck-und Temperatursensors und des Magnetfeldsensors eine Temperaturmessung, eine Frequenzmessung, eine Druckmessung und eine Magnetfeldmessung möglich ist, ohne dass sich die einzelnen Messungen in ihren Messergebnissen beeinflussen. Erfindungsgemäß umgibt eine Wanne oder Isolatorwanne einen Einzelsensor wenigstens an seinen Seiten und an seinem Boden vollständig. Damit wird durch die Entkopplung der einzelnen Messungen mittels der Isolatorwannen ermöglicht, dass die Einzelsensoren in ein Gesamtsystem (Multisensor) integriert werden können. Durch die Integration der verschiedenen Einzelsensoren in einen Multisensor kann vorzugsweise auf eine Vielzahl von verschiedenen Einzelplatinen verzichtet werden. Dadurch wird vorteilhafterweise Platz eingespart.

Des Weiteren ist eine aufwändige Einzelverdrahtung der Einzelsensoren nicht mehr notwendig, da die Gesamtintegration durch die Verwendung der Isolatorwannen zur elektrischen und mechanischen Entkoppelung ermöglicht ist. Dies ist auch herstellungstechnisch und montagetechnisch von Vorteil, da sich so der erfindungsgemäße Multisensor kostengünstiger herstellen lässt.

Vorteilhafte Ausgestaltungen und Weiterbildungen der Erfindung sind den Unteransprüchen sowie der Beschreibung unter Bezugnahme auf die Zeichnung entnehmbar.

Gemäß einer bevorzugten Ausgestaltung der Erfindung ist mindestens eine der Isolatorwannen jeweils als Siliziumoxidwanne ausgebildet. Diese wannenförmige Isolatorstruktur umschließt als den entsprechenden Sensor vollständig, d.h. sowohl in lateraler Richtung also auch in vertikaler Richtung des Halbleiterkörpers, also in dessen Tiefe. Die Siliziumoxidwanne kann zum Beispiel als SOI (Silicon on Isolator)-Struktur ausgebildet sein. Die Einbettung eines jeden Einzelsensors in eine Siliziumoxidwanne einer SOI (Silicon on Isolator)-Struktur ermöglicht eine besonders vorteilhafte elektrische und mechanische Entkoppelung der Einzelsensoren voneinander. Auch andere Materialen für die Isolatorwanne, wie zum Beispiel Si₃N₄, SOD (Silicon on Diamond), SOG (Silicon on Glas), TEOS (Tetraethoxysilan), Low-K, High-K oder dergleichen, sind denkbar.

Gemäß einer bevorzugten Weiterbildung der Erfindung ist der Magnetfeldsensor als ein Gatter-Feld-Magnetfeldsensor (Gate Array) mit einer Mehrzahl von Gatter-Magnetfeldsensoren (Gates) ausgebildet, welche eine horizontale und vertikale Messstruktur ausbilden, sodass ein zu messendes Magnetfeld dreidimensional darstellbar ist. Vorteilhafterweise erlaubt die Ausbildung des Magnetfeldsensors als eine Gate Array von Magnetfeldsensoren eine sehr genaue Messung über einen weiten Messbereich, welche von den heute vielfach eingesetzten einzelnen Hall-Elementen nicht erreicht werden kann. Der Gatter-Feld-Magnetfeldsensor ist also als Oberflächen- und Tiefenmatrix aufgebaut, sodass sowohl in vertikaler als auch in horizontaler Richtung eine Lagemessung des magnetischen Feldes in den drei Koordinatenebenen (X-, Y-, Z-Achse) ermöglicht ist. Durch diese Achsenaufteilung wird eine genaue Richtungsableitung des magnetischen Feldes und damit eine sichere Winkelmessung des magnetischen Feldes ermöglicht. Vorteilhafterweise sind die Flächen- und Tiefengröße des Gatter-Feld-Magnetfeldsensors skalierbar, sodass in Bezug auf Dynamikbereich und Genauigkeitsanforderung an den Multisensor hohe Freiheitsgrade bereitgestellt werden können.

Gemäß einer weiteren bevorzugten Weiterbildung ist eine Ansteuervorrichtung vorgesehen, welche den Druck-/Temperatursensor derart ansteuert, dass der Druck-/Temperatursensor als Ultraschallsender zur drahtlosen Übertragung von Messdaten des Multisensors arbeitet. Vorteilhafterweise wird durch die Verwendung des Druck-/Temperatursensors als Ultraschallsender ermöglicht auf einen eigens vorzusehenden Sender zur Übertragung der Messdaten des Multisensors zu verzichten. Dadurch werden Platz innerhalb des Multisensors und Kosten eingespart. Außerdem verringert sich dadurch die Gesamtgröße des Multisensors.

Gemäß einer weiteren bevorzugten Weiterbildung ist wenigstens ein Kühlungskanal zur Kühlung des Multisensors vorgesehen. Vorteilhafterweise wird durch das Vorsehen der Kühlungskanäle der Umlauf eines Kühlmediums zur Kühlung des Multisensors auch bei hohen Temperatureinflüssen gewährleistet.

Gemäß einer weiteren bevorzugten Ausgestaltung wird der wenigstens eine Kühlungskanal bei einer Anordnung des Multisensors in dem Motor eines Kraftfahrzeuges von Kraftstoff durchflossen, sodass der durchfließende Kraftstoff den Multisensor kühlt. Im Inneren eines Motors eines Kraftfahrzeuges herrschen Temperaturen von mehreren 100° Celsius, sodass der Umlauf des Kraftstoffs, welcher in der Regel eine Temperatur von etwa 10 bis 40° Celsius aufweist, zugleich den Multisensor kühlt.

Gemäß einer weiteren bevorzugten Weiterbildung ist eine Mehrzahl von Metallkontaktierungen vorgesehen, wobei eine Metallkontaktierung einen Druck-/Temperatursensor oder einen Magnetfeldsensor elektrisch kontaktiert. Die Metallkontaktierungen bestehen beispielsweise aus Aluminium oder Kupfer und ermöglichen jeweils die elektrische Verbindung der Einzelsensoren zu einer elektronischen Steuereinrichtung des Multisensors.

Gemäß einer weiteren bevorzugten Weiterbildung ist wenigstens ein Magnetfeldsensor als Hallsensor ausgebildet oder mit wenigstens zwei pin-Halbleiter-Dioden aufgebaut.

Gemäß einer weiteren bevorzugten Weiterbildung ist eine Eichvorrichtung mit einer Lumineszenzdiodenstrecke zur Eichung des wenigstens einen Magnetfeldsensors vorgesehen. Damit sind vorteilhafterweise die Systemeigenschaften des Magnetfeldsensors oder der Magnetfeldsensoren mittels der Elektronenemittierung der Lumineszenzdiode im Betrieb des Multisensors korrigierbar, sodass eine Langzeitstabilität erreicht werden kann und Alterungseffekte ausgeschlossen werden können.

Gemäß einer weiteren bevorzugten Ausgestaltung weist der Druck-/Temperatursensor eine polysilikone Membran und/oder eine Referenzmembran und/oder ein Wolframplättchen zur Lagerung und Kontaktierung der polysilikonen Membran und/oder akustische Löcher auf. Insbesondere die Kontaktierung über die Wolframplättchen in der SOI (Silicon on Isolator)-Struktur erlaubt den Einsatz des Multisensors in einem Hochtemperaturbereich, in einem Hochdruckbereich und somit in der Umweltmess- und Automobiltechnik.

Gemäß einer weiteren bevorzugten Weiterbildung ist eine Mehrzahl von Druck-/Temperatursensoren vorgesehen, welche konzentrisch angeordnet sind, sodass verschiedene Druckbereiche gemessen werden könnten. Beispielsweise können bei einem Vorsehen von drei konzentrisch angeordneten Druck/Temperatursensoren drei differenzierte Messbereiche von 1 bis 10 bar, 10 bis 100 bar und > 300 bar bereitgestellt werden.

Die Erfindung wird nachfolgend anhand der in den schematischen Figuren der Zeichnung angegebenen Ausführungsbeispiele näher erläutert. Es zeigen dabei:
- Fig. 1: eine schematische Querschnittsansicht eines ersten bevorzugten Ausführungsbeispiels des erfindungsgemäßen Multisensors;
- Fig. 2: eine schematische Querschnittsansicht des Schichtaufbaus eines zweiten bevorzugten Ausführungsbeispiels des erfindungsgemäßen Multisensors; und
- Fig. 3: eine schematische Draufsicht einer konzentrischen Anordnung einer Mehrzahl von Druck-/Temperatursensoren nach einem dritten Ausführungsbeispiel des erfindungsgemäßen Multisensors.

In den Figuren der Zeichnung sind gleiche bzw. funktionsgleiche Elemente und Signale - sofern nichts anderes angegeben ist - mit denselben Bezugszeichen versehen worden.

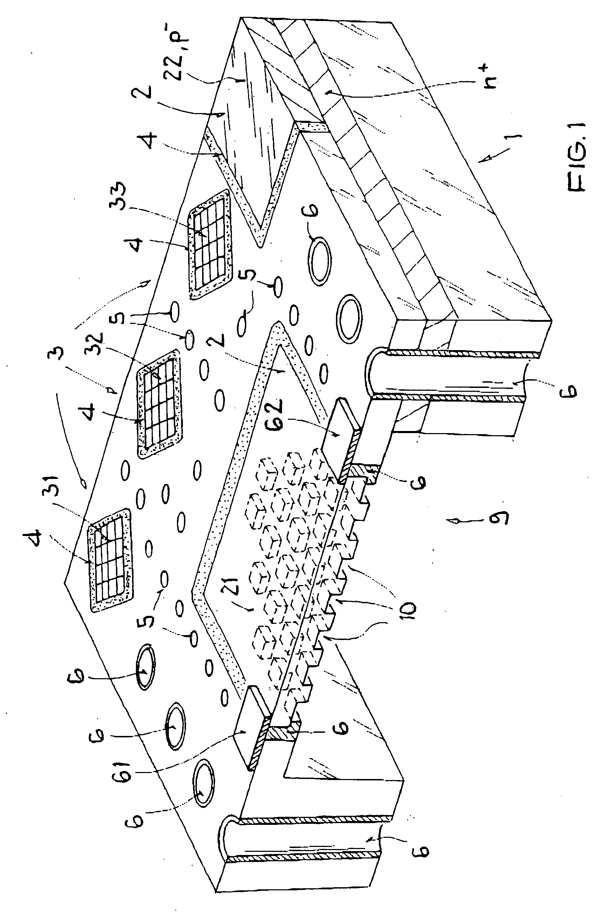

Fig. 1 zeigt eine schematische Ansicht eines ersten bevorzugten Ausführungsbeispiels des erfindungsgemäßen Multisensors 1. Der integrierte Multisensor 1 ist im Wesentlichen mittels eines SOI (Silicon on Isolator)-Basisprozesses aufgebaut. Der erfindungsgemäße integrierte Multisensor 1 weist einen ersten Druck-/Temperatursensor 21, einen zweiten Druck-/Temperatursensor 22, einen ersten Magnetfeldsensor 31, einen zweiten Magnetfeldsensor 32 und einen dritten Magnetfeldsensor 33 auf. Jeder einzelne Sensor 21, 22, 31, 32, 33 ist mittels einer Isolatorwanne 4 derart umgeben, dass die einzelnen Sensoren 21, 22, 31, 32, 33 jeweils voneinander elektrisch und mechanisch entkoppelt sind. Vorzugsweise ist die Mehrzahl von lsolatorwannen jeweils als eine Siliziumoxidwanne ausgebildet.

Weiter weist der erfindungsgemäße Multisensor 1 eine Ansteuervorrichtung (nicht gezeigt) auf, welche den Druck-/Temperätursensor 2 derart ansteuert, dass der Druck-/Temperatursensor 2 als Ultraschallsender zur drahtlosen Übertragung von Messdaten des Multisensors 1 arbeitet. Das Bezugszeichen 9 bezeichnet die Resonanzfläche des ersten Druck-/Temperatursensors 21.

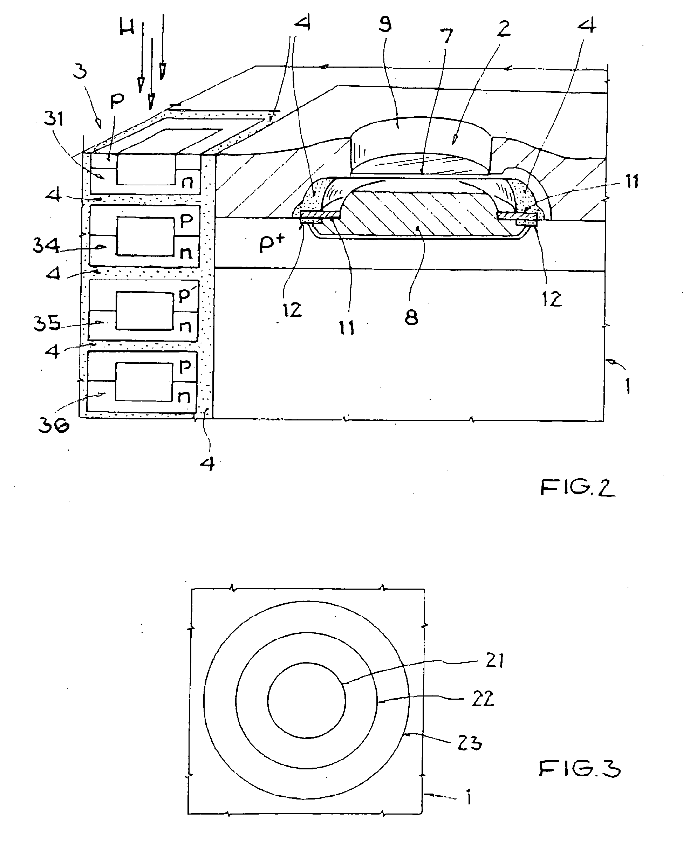

Beispielsweise weist der Druck-/Temperatursensor 21 akustische Löcher 10 auf, durch welche ein zu messendes Medium an eine Referenzmembran 8 (vergleiche Fig. 2) des Druck-/Temperatursensor 21 hindurchführbar ist.

Des Weiteren weist der Multisensor 1 vorzugsweise eine Mehrzahl von Kühlungskanälen 5 zur Kühlung des Multisensors 1 auf. Beispielsweise werden die Kühlungskanäle 5 bei einer Anordnung des Multisensors 1 in einer Brennkraftmaschine eines Kraftfahrzeuges von Kraftstoff durchflossen, sodass der durchfließende Kraftstoff den Multisensor 1 kühlt.

Weiter weist der erfindungsgemäße Multisensor 1 eine Mehrzahl von Metallkontaktierungen 6 auf, wobei eine Metallkontaktierung 6 einen Druck-/Temperatursensor 2 oder einen Magnetfeldsensor 3 elektrisch kontaktiert.

Weiter weist der Multisensor 1 einen ersten Metallanschluss 61 und einen zweiten Metallanschluss 62 auf, zwischen welchen über weitere Metallkontaktierungen 6 der erste Druck-/Temperatursensor 21 durch die Ansteuervorrichtung (nicht gezeigt) angesteuert werden kann. Für alle weiteren vorgesehenen Einzelsensoren 2; 21 - 22; 3; 31 - 36 gilt Analoges.

Vorzugsweise sind die Magnetfeldsensoren 3; 31, 32, 33 jeweils als ein HallSensor ausgebildet oder aus wenigstens zwei pin-Halbleiter-Dioden aufgebaut.

Weiter ist vorzugsweise eine Eichvorrichtung (nicht gezeigt) mit einer Lumineszensdiodenstrecke zur Eichung der Magnetfeldsensoren 3; 31, 32, 33 vorgesehen. Mittels der Eichvorrichtung kann eine Langzeitstabilität des Multisensors 1 erreicht werden und Alterungseffekte von Bauteilen der Magnetfeldsensoren 3; 31, 32, 33 können ausgeschlossen werden.

Vorzugsweise ist der Magnetfeldsensor 3 als ein Gatter-Feld-Magnetfeldsensor mit einer Mehrzahl von Gatter-Magnetfeldsensoren 31, 32, 33; 31, 34, 35, 36 (siehe Fig. 2) ausgebildet, welche eine horizontale und vertikale Messstruktur ausbilden, sodass ein zu messendes Magnetfeld H dreidimensional darstellbar ist.

Dazu ist Fig. 2 eine schematische Querschnittsansicht des Schichtaufbaus eines zweiten bevorzugten Ausführungsbeispiels des erfindungsgemäßen Multisensors 1 dargestellt. Dabei zeigt die linke Seite der Fig. 2 den Magnetfeldsensor 3, ausgebildet als ein Gatter-Feld-Magnetfeldsensor mit der vertikalen Messstruktur der Gatter-Magneffeldsensoren 31, 34, 35, 36, welche jeweils von einer Isolatorwanne 4 umgeben sind.

In der rechten Hälfte von Fig. 2 ist ein Druck-/Temperatursensor 2 in detaillierter Darstellung gezeichnet. Der Magnetfeldsensor 3 und der Druck-/Temperatursensor 2 sind ebenfalls durch eine Wand einer Isolatorwanne 4 elektrisch und mechanisch entkoppelt. Der Druck-/Temperatursensor 2 weist eine polysilikone Membran 7 zur Druck-/Frequenz-/ und Temperaturmessung auf. Die Schwingung der polysilikonen Membran 7 wird relativ zu einer Referenzmembran 8 gemessen. Weiter ist innerhalb des Druck-/Temperatursensors 2 ein Wolframplättchen 11 zur Lagerung und Kontaktierung der polysilikonen Membran 7 vorgesehen. Zwischen einer p⁺-dotierten Siliziumschicht der SOI-Basis und dem Wolframplättchen 11 ist zur Isolation eine Isolationsschicht 12 vorgesehen.

Fig. 3 zeigt eine schematische Draufsicht einer konzentrischen Anordnung einer Mehrzahl von Druck-/Temperatursensoren 21, 22, 23 nach einem dritten Ausführungsbeispiel des erfindungsgemäßen Multisensors 1. Magnetfeldsensoren 3 sind in Fig. 3 nicht abgebildet. Der erste Druck-/Temperatursensor 21, der zweite Druck-/Temperatursensor 22 und der dritte Druck-/Temperatursensor 23 sind als konzentrische Drucklinsen ausgebildet, sodass verschiedene Druckbereiche gemessen werden können. Beispielsweise kann mit dem ersten Druck-/Temperatursensor 21 ein Messbereich von 1 bis 10 bar, mit dem zweiten Druck-/Temperatursensor 22 ein Messbereich von 10 bis 100 bar und mit dem dritten Druck-/Temperatursensor 23 ein Temperaturbereich über 300 bar gemessen werden.

Obgleich die vorliegende Erfindung vorstehend anhand bevorzugter Ausführungsbeispiele beschrieben wurde, ist sie darauf nicht beschränkt, sondern auf vielfältige Art und Weise modifizierbar. Insbesondere die Anordnung der einzelnen Sensoren, der Druck-/Temperatursensoren und der Magnetfeldsensoren, ist beliebig und kann auf den jeweiligen Belegungsplan (Floorplan) angepasst werden. Auch die Anzahl der Einzelsensoren ist beliebig.

### Bezugszeichenliste

- 1: Multisensor
- 2: erster Druck-/Temperatursensor
- 21: erster Druck-/Temperatursensor
- 22: zweiter Druck-/Temperatursensor
- 23: dritter Druck-/Temperatursensor
- 3: Magnetfeldsensor
- 31: erster Magnetfeldsensor
- 32: zweiter Magnetfeldsensor
- 33: dritter Magnetfeldsensor
- 34: vierter Magnetfeldsensor
- 35: fünfter Magnetfeldsensor
- 36: sechster Magnetfeldsensor
- 4: Isolatorwanne
- 5: Kühlungskanäle
- 6: Metallkontaktierung
- 61: erster Metallanschluss
- 62: zweiter Metallanschluss
- 7: polysilikone Membran
- 8: Referenzmembran
- 9: Resonanzfläche
- 10: akustische Löcher
- 11: Wolframplättchen
- 12: Isolationsschicht

- n⁺: n⁺-dotiertes Silizium
- n: n-dotiertes Silizium
- p: p-dotiertes Silizium
- p⁺ +: p⁺-dotiertes Silizium
- H: Magnetfeld

## Patentansprüche

1. Integrierter Multisensor (1), insbesondere für einen Einsatz in einer Brennkraftmaschine eines Kraftfahrzeugs, mit:
- wenigstens einem Druck-/Temperatursensor (2;21-23),
- wenigstens einem Magnetfeldsensor (3;31-36), und
- mit einer Mehrzahl von Isolatorwannen (4), wobei jeweils eine Isolatorwanne (4) einen Druck-/Temperatursensor (2; 21-23) oder einen Magnetfeldsensor (3; 31-36) derart umgibt, dass die Sensoren (2;21-23, 3;31-36) jeweils voneinander elektrisch und mechanisch entkoppelt sind.

2. Multisensor nach Anspruch 1,
**dadurch gekennzeichnet,**
**dass** zumindest eine der Isolatorwannen (4) als eine Siliziumoxidwanne ausgebildet ist.

3. Multisensor nach wenigstens einem der vorstehenden Ansprüche,
**dadurch gekennzeichnet,**
**dass** der Magnetfeldsensor (3;31-36) als ein Gatter-Feld-Magnetfeldsensor mit einer Mehrzahl von Gatter-Magnetfeldsensoren ausgebildet ist, welche eine horizontale und vertikale Messstruktur ausbilden, über die ein zu messendes Magnetfeld (H) dreidimensional darstellbar ist.

4. Multisensor nach wenigstens einem der vorstehenden Ansprüche,
**dadurch gekennzeichnet,**
**dass** eine Ansteuervorrichtung vorgesehen ist, welche den Druck-/Temperatursensor (2;21-23) derart ansteuert, dass der Druck-/Temperatursensor (2;21-23) als Ultraschallssender zur drahtlosen Übertragung von Messdaten des Multisensors (1) arbeitet.

5. Multisensor nach wenigstens einem der vorstehenden Ansprüche,
**dadurch gekennzeichnet,**
**dass** wenigstens ein Kühlungskanal (5) zur Kühlung des Multisensors (1) vorgesehen ist.

6. Multisensor nach Anspruch 5,
**dadurch gekennzeichnet,**
**dass** wenigstens ein Kühlungskanal (5) bei einer Anordnung des Multisensors (1) in dem Motor eines Kraftfahrzeugs von einem Kraftstoff zum Antrieb des Kraftfahrzeugs durchflossen wird, wobei der durchfließende Kraftstoff den Multisensor (1) kühlt.

7. Multisensor nach wenigstens einem der vorstehenden Ansprüche,
**dadurch gekennzeichnet,**
**dass** eine Mehrzahl von Metallkontaktierungen (6) vorgesehen ist, wobei eine Metallkontaktierung (6) jeweils einen Druck-/Temperatursensor (2;21-23) oder einen Magnetfeldsensor (3;31-36) elektrisch kontaktiert.

8. Multisensor nach wenigstens einem der vorstehenden Ansprüche,
**dadurch gekennzeichnet,**
**dass** wenigstens ein Magnetfeldsensor (3;31-36) als Hallsensor ausgebildet ist oder mit wenigstens zwei pin-Halbleiter-Dioden aufgebaut ist.

9. Multisensor nach wenigstens einem der vorstehenden Ansprüche,
**dadurch gekennzeichnet,**
**dass** eine Eichvorrichtung mit einer Lumineszenzdiodenstrecke zur Eichung des wenigstens einen Magnetfeldsensors (3;31-36) vorgesehen ist.

10. Multisensor nach wenigstens einem der vorstehenden Ansprüche,
**dadurch gekennzeichnet ,**
**dass** zumindest ein Druck-/Temperatursensor (2;21-23) eine polysilikone Membran (7) und/oder eine Referenzmembran (8) und/oder ein Wolframplättchen (11) zur Lagerung und Kontaktierung einer Membran (7,8) und/oder akustische Löcher (10) aufweist.

11. Multisensor nach wenigstens einem der vorstehenden Ansprüche,
**dadurch gekennzeichnet,**
**dass** eine Mehrzahl von Druck-/Temperatursensoren (2;21-23) vorgesehen ist, welche zur Messung verschiedener Druckbereiche zueinander konzentrisch angeordnet sind.
